# EUROPÄISCHE PATENTSCHRIFT

(11) **EP 1 040 288 B1**
(45) Veröffentlichungstag und Bekanntmachung des Hinweises auf die Patenterteilung: **10.07.2002**
(21) Anmeldenummer: 98965837.2
(22) Anmeldetag: 15.12.1998
(51) Int. Cl.: F16H 61/30

(54) **SCHALTEINRICHTUNG**
GEAR SHIFTING DEVICE
UNITE DE CHANGEMENT DE VITESSES

(30) Priorität: 19.12.1997 DE 19756639
(43) Veröffentlichungstag der Anmeldung: 04.10.2000
(73) Patentinhaber: ZF FRIEDRICHSHAFEN Aktiengesellschaft, 88038 Friedrichshafen (DE)
(72) Erfinder: PETZOLD, Rainer, D-88045 Friedrichshafen (DE)
(86) Internationale Anmeldenummer: EP9808202
(87) Internationale Veröffentlichungsnummer: WO9932810

(56) Entgegenhaltungen:
- EP-A- 0 064 641
- EP-A- 0 085 498
- EP-A- 0 271 234
- EP-A- 0 368 230
- EP-A- 0 487 861
- DE-A- 4 309 027
- DE-A- 4 325 964
- DE-A- 19 637 001
- SU-A- 1 333 878
- US-A- 5 566 070

## Beschreibung

Die Erfindung betrifft eine Schalteinrichtung für ein mehrgängiges Stufenwechselgetriebe nach dem Oberbegriff des Anspruchs 1.

Aus der EP 0 487 861 A1 ist ein derartiges gattungsgemäßes Dreistellungszylindersystem bekannt, das einen Stellzylinder mit einem doppelseitig druckmittelbeaufschlagbaren, über Steuerorgane, wie Wegeventile, steuerbaren Kolben aufweist, der mit einem Schaltelement, wie z.B. Schaltgabel oder Schaltstange gekoppelt ist. Der Kolben besteht aus zwei entgegengesetzt wirkenden, in einem gemeinsamen Zylindergehäuse verschiebbaren Doppelkolben und jedem der beiden Doppelkolben ist im Zylindergehäuse ein Druckraum mit einem Druckmittelanschluss zugeordnet. Der erste Kolben jedes Doppelkolbens ist mit dem Schaltelement bewegungsstarr und der zweite Kolben jedes Doppelkolbens mit dem ersten Kolben freiverschieblich verbunden. Die beiden Doppelkolben werden bei beiderseitigem Druckausgleich mit ihrem freiverschieblichen, zweiten Kolben gegen einen Anschlag des Zylindergehäuses in der Neutralstellung gehalten wechselweise bei jeweils einseitiger Druckbeaufschlagung aus der Neutralstellung in die Schaltstellung verschoben, wobei der drucklose Doppelkolben mit seinen beiden Kolben des druckbeaufschlagten Doppelkolbens seine Schaltverschiebung erhält. Ventile, Kolben, Schaltzylinder und Schaltelemente sind für eine Schaltgruppe in einer Einheit zusammengefasst.

Aus der EP 0 368 230 A1 ist eine Schalthilfe für ein Zahnradwechselgetriebe eines Fahrzeugs bekannt, das mit Steuerungs- und Stellgliedern versehen ist, die mit einer Druckmittelquelle verbunden sind, und die vorgesehen sind zur Verschiebung von Schaltstangen und Schaltgabeln. Als Stellglied ist ein je mit zwei Kolben und getrennten Zylinderräumen versehener Stellzylinder vorgesehen, der in der Längsachse der Schaltstange innerhalb des Getriebegehäuses angeordnet ist. Die Schalthilfe erfolgt hydraulisch.

Aus der EP 0 541 035 ist eine Schalteinrichtung für mehrgängige Stufenwechselgetriebe bekannt, die Ventile und Schaltzylinder aufweist, in denen sich von einem Steuerfluid betätigte Kolben befinden. An den Schaltzylindern sind Schaltstangen angeschlossen, die über Schaltelemente auf Bauteile des Getriebes zur Bildung einer drehmomentübertragenden Verbindung einwirken. Eine Schaltstange betätigt dabei die einer Schaltgruppe zugehörigen Bauteile.

Die Schaltstangen weisen eine hohe Masse auf, die zur Gesamtmasse des Getriebes nachteilig beiträgt, und die bei jedem Schaltvorgang von der Schalteinrichtung beschleunigt und abgebremst werden muß.

Der vorliegenden Erfindung liegt die Aufgabe zugrunde, eine Schalteinrichtung aufzuzeigen, die den Nachteil bestehender Schalteinrichtungen beseitigt.

Die Aufgabe wird gelöst mit einer Schalteinrichtung mit den Merkmalen nach Anspruch 1, Ausgestaltungen sind Gegenstand von Unteransprüchen.

Es wird vorgeschlagen, für jede Schaltgruppe des Stufenwechselgetriebes eine Einheit vorzusehen, in der die Ventile, Schaltzylinder, Kolben und Schaltelemente zusammengefaßt sind.

Im Gegensatz zu den bekannten Schalteinrichtungen sitzt die gesamte Schalteinrichtung in unmittelbarer Nähe der Schaltgruppe.
Eine Schaltgruppe wird vorzugsweise gebildet aus zwei im Getriebe nebeneinander angeordneten Zahnrädern, die wechselweise in die Drehmomentübertragung eingeschaltet werden können. Eine Schaltgruppe kann jedoch auch nur aus einem in die Drehmomentübertragung einschaltbarem Zahnrad bestehen, wenn beispielsweise bei der Schaltung einer Rückwärtsgangübersetzung nicht zwei gegenüberliegende Zahnräder geschaltet werden müssen.

Durch die Anordnung in einer kompakten Einheit können Verbindungselement zwischen den vorzugsweise aus Schaltgabeln oder Schaltschwingen gebildeten Schaltelementen und den Schaltzylindern und Schaltkolben entfallen. Solche Verbindungselemente sind, wie bereits erwähnt, im wesentlichen aus Stahl gefertigte Schaltstangen, die in hohem Maße zur Gesamtmasse des Getriebes beitragen. Die Reaktionszeiten zwischen dem eine Schaltung auslösenden Befehl und der Bewegung der Schaltelemente wird durch den Wegfall der zu bewegenden massigen Schaltstangen deutlich verkürzt. Dadurch können in einer vorteilhaften Ausgestaltung als auslösende Ventile gepulste 2/2-Wegeventile verwenden werden. Damit ist es möglich, beim Einschalten der Zahnräder in eine drehmomentübertragende Verbindung eine Anpassung von Schaltkraft und Schaltzeit vorzunehmen. Die Anpassung besteht vorzugsweise darin, daß beim Einschalten der Verbindung die Ventile mit einer höheren Frequenz beaufschlagt werden, als beim Ausschalten.
Das Betreiben der gepulsten Ventile erfolgt in einer vorteilhaften Ausgestaltung mit einer Spannung, die ein Mehrfaches der Nennspannung des Ventils beträgt.
Zur Anpassung der gepulsten Ventile wird vorteilhafterweise eine Wegmesseinrichtung verwendet, die die aktuelle Position des Kolbens in Bezug auf den Schaltzylinder anzeigt. Vorzugsweise ist die Wegmesseinrichtung innerhalb des Schaltzylinders angeordnet. Sie kann aber auch an einer Position außerhalb des Schaltzylinders vorgesehen sein, wo sie mit dem beweglichen Teil der Einheit verbunden ist.

In einer weiteren vorteilhaften Ausgestaltung ist der Kolben der Schalteinheit auf einer Kolbenstange angeordnet, auf der er axial bewegbar ist. Auf dieser einen Kolbenstange können die Kolben der Schalteinheiten von mehrerer Schaltgruppen vorgesehen sein, ohne sich gegenseitig zu behindern. Vorzugsweise sind die Einheiten für die jeweiligen Schaltgruppen in einer Reihe angeordnet.

In einer weiteren vorteilhaften Ausgestaltung werden mehrere Schalteinheiten, von denen jede Schalteinheit zu jeweils einer Schaltgruppe gehört, in einem Bauteil zusammengefaßt. Dieses Bauteil kann vom Getriebe separat zusammenbaubar sein und dann an das Getriebe als eine Einheit angepasst und angebaut werden. Dieses ermöglicht auch eine separate Fertigung und Prüfbarkeit einer kompletten Schalteinrichtung unabhängig von der jeweiligen Getriebeart.

In einer vorteilhaften Ausgestaltung weisen die Schalteineinheiten Anschläge auf, die ein Anschlagen der Kolben an den Rändern der Schaltzylinder dämpfen. Diese Anschläge können innerhalb des Schaltzylinders vorgesehen sein, oder aber auch außerhalb an einer mit dem Kolben verbundenen Teil der Schalteinheiten vorgesehen sein.
Die Erfindung wird anhand einer Zeichnung näher beschrieben.

Es zeigen:
- Fig. 1: Getriebe mit Schalteinrichtungen;
- Fig. 2: Anordnung von Schalteinrichtungen in Reihe und
- Fig. 3: Darstellung einer Schalteinrichtung.

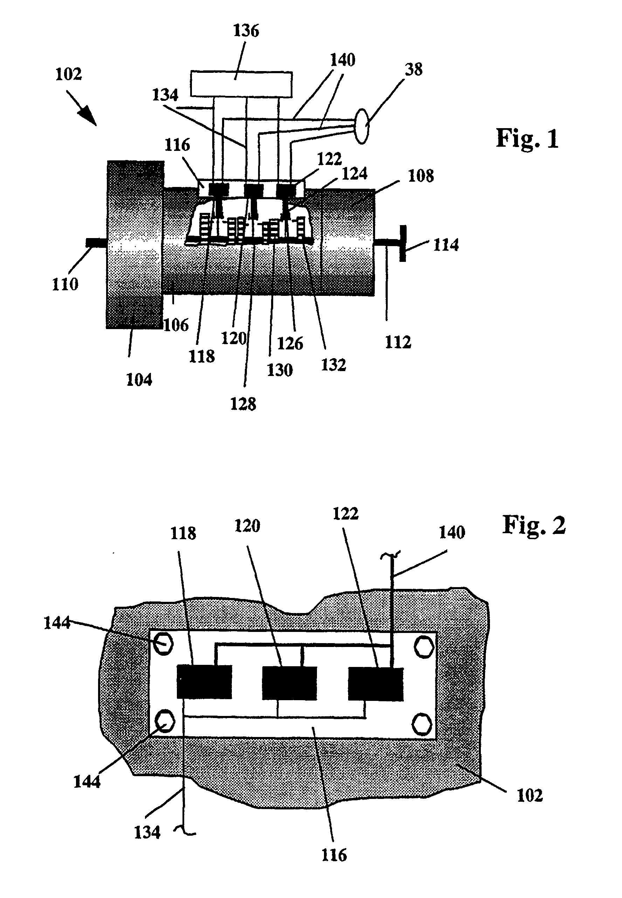

Die Fig. 1 zeigt eine schematische Darstellung eines Getriebes 102 in einem hier nicht dargestellten Fahrzeug. Das Getriebe 102 weist eine Kupplungsglocke 104, ein Hauptgetriebe 106 und ein Hilfsgetriebe 108 auf, weiterhin eine Antriebswelle 110 und eine Abtriebswelle 112 mit Abtriebsflansch 114. Am Hauptgetriebe 106 ist ein Bauteil 116 vorgesehen. Das Bauteil 116 zeigt in der hier dargestellten Anordnung drei einzelne Schalteinrichtungen 118, 120 und 122. Die beispielhaft gezeigte Schalteinrichtung 118 greift mit einer Schaltgabel 124 in eine Schiebemuffe 126 ein, die entlang einer Welle 128 axial verschiebbar ist und mit der Welle 128 drehfest verbunden ist. Durch eine Verschiebung läßt sich die Schiebemuffe 126 zur Bildung einer Drehmomentübertragung entweder mit dem Zahnrad 130 oder dem Zahnrad 132 verbinden. Die Schalteinrichtungen 118, 120 und 122 sind über elektrische Leitungen 134 mit einer Steuereinrichtung 136, beispielsweise einem elektronischen Getrieberechner oder Fahrzeugleitrechner verbunden. Ebenfalls sind die Schalteinrichtungen 118, 120 und 122 mit einer Druckquelle 138 für ein Betätigungsfluid über Leitungen 140 verbunden.

Fig. 2 zeigt einen Ausschnitt des Gehäuses von Getriebe 102, in dem in einem Bauteil 116 die Schalteinrichtungen 118, 120 und 122 zusammengefaßt sind. Das Bauteil 116 ist mit Hilfe von Verbindungselementen 144 am Getriebe 102 befestigt. Zu den Schalteinrichtungen 118, 120 und 122 führen Leitungen 140 zur Zuführung des Betätigungsfluids und elektrische Leitungen 134 zur Verbindung mit der Steuereinrichtung 136.

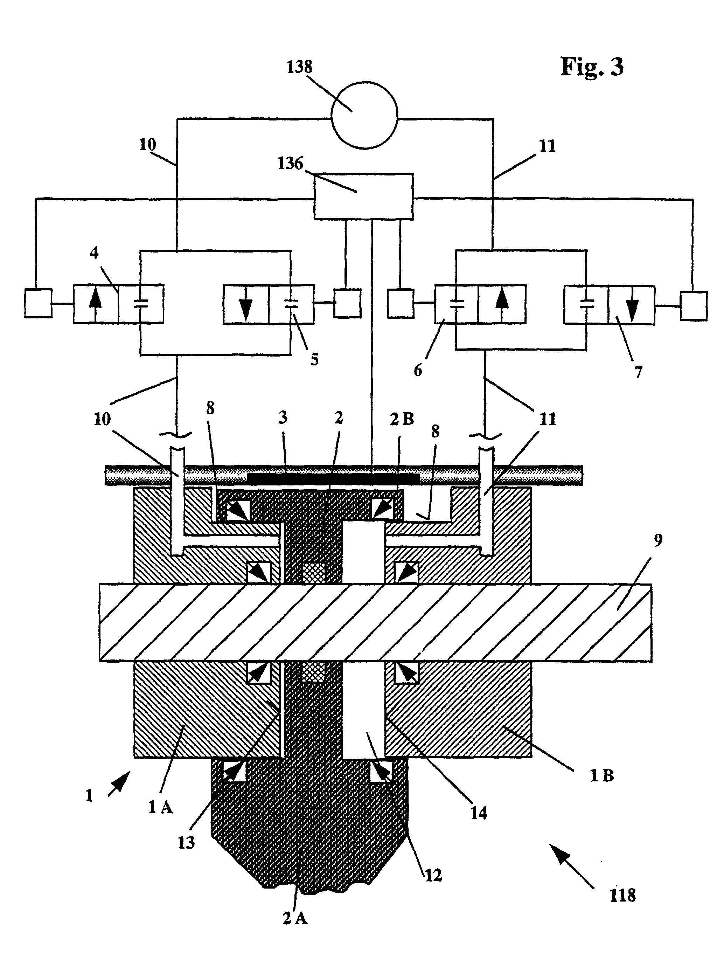

Die Fig. 3 zeigt eine Prinzipdarstellung einer Schalteinrichtung 118 für automatisierte Schaltgetriebe in Fahrzeugen mit Wegmeßeinrichtung und pulsfähigen Wegeventilen im Längsschnitt, welche einen Schaltzylinder 1, der aus zwei Zylinderteilen 1A und 1B ausgebildet ist, und einen Schaltkolben 2 aufweist.

Durch die Gestaltung des Schaltzylinders 1 aus zwei separaten Zylinderteilen 1A und 1B können die bewegten Massen erheblich reduziert werden.

Im dargestellten Ausführungsbeispiel bewegt sich der als Schaltelement ausgebildete Schaltkolben 2 zwischen den fixierten Zylinderteilen 1A und 1B.

Der Schaltkolben 2 ist dabei mit einer Schaltgabel 2A als einstückiges Bauteil ausgeführt, wodurch Verbindungselemente zwischen dem Schaltkolben 2 und einem weiteren Schaltelement, wie beispielsweise der Schaltgabel 2A oder einer möglichen Schaltschwinge, nicht benötigt werden. Die Verbindung zwischen Schaltkolben 2 und Schaltgabel 2A ist somit robust und auf kürzestem Wege ausgebildet.

Genauso ist es aber auch in einer anderen, nicht dargestellten Ausführung möglich, daß die Zylinderteile 1A und 1B mit der Schaltgabel 2A verbunden sind, wobei die Zylinderteile 1A und 1B die Bewegung relativ zum Schaltkolben 2 ausführen.

Aufgrund der konstruktiv sehr vorteilhaften Ausführung des Schaltzylinders 1, nämlich in geteilter Bauweise aus zwei Zylinderteilen 1A und 1B, können somit auch die Zylinderteile 1A und 1B als Schaltelemente dienen, wodurch eine variablere Getriebegestaltung möglich ist.

Zur Erfassung der Stellung des Schaltkolbens 2 im Schaltzylinder 1 bzw. zwischen den Zylinderteilen 1A und 1B gemäß Fig. 3 ist parallel zur Verschiebeachse des Schaltkolbens 2 eine Wegmeßeinrichtung 3 angebracht, beispielsweise induktive Wegsensoren, die mit einer Steuereinrichtung 136 verbunden sind, welche in Abhängigkeit der von den induktiven Wegsensoren ermittelten Stellung des Schaltkolbens 2 elektronische Steuersignale an pulsfähige Ventile 4, 5, 6 und 7 weitergibt.

Der Schaltkolben 2 weist einen Führungsabsatz 2B auf, über den er in einer Eindrehung 8, welche an jedem der Zylinderteile 1A und 1B ausgebildet ist, geführt ist. Sowohl die Zylinderteile 1A und 1B als auch der Schaltkolben 2 sind um eine Schiene 9 angeordnet, welche mittig durch die Zylinderteile 1A und 1B und den Schaltkolben 2 in Bewegungsrichtung des Schaltkolbens 2 verläuft.

Die Anordnung der Zylinderteile 1A und 1B des Schaltzylinders 1 und des Schaltkolben 1 auf der Schiene 9 ist vor allem dahingehend vorteilhaft, daß dadurch eine Reihe von Schaitzylindern auf geringem Bauraum einfach angeordnet werden können, wobei besonders der verringerte Teileaufwand und die einfache Montage entscheidende Kostenvorteile bringen. Prinzipiell können die Betätigungen für alle Schalteinrichtungen eines Getriebes auf dieser Schiene 9 angebracht werden.

Bezug nehmend auf Fig. 3 sind die Zylinderteile 1A und 1B auf der Schiene 9 fest vormontiert eingebaut, sie können aber selbstverständlich auch abhängig von den Getriebetoleranzen im eingebauten Zustand fixiert werden.

Zum Schalten des Schaltkolbens 2 im Schaltzylinder 1 wird aus einer externen Druckquelle 138 über die Druckleitungen 10 bzw. 11 ein pneumatisches oder hydraulisches Druckmittel der Schalteinrichtung zugeführt. In den Druckleitungen 10 und 11 sind jeweils zwei elektromagnetische 2/2-Wegeventile 4 und 5 bzw. 6 und 7 zwischengeschaltet, die den Durchfluß des Druckmittels durch die Druckleitungen 10 bzw. 11 derart steuern, daß sich der Schaltkolben 2 mit einer Geschwindigkeit, die einer empirisch oder über eine Simulation ermittelten Optimalgeschwindigkeit in dieser Wegposition entspricht, bewegt. Die Art und Weise der Ventilansteuerung kann dabei getriebespezifisch von den zu schaltenden Massen abhängig angepaßt werden.

Die pulsfähigen Ventile 4, 5, 6 und 7 sind für einen Dauerbetrieb bei 4 Volt ausgelegt, jedoch werden sie hier mit 24 Volt-Impulsen betrieben. Durch die Ansteuerung der Pulsventile 4, 5, 6 und 7 mit starken Stromimpulsen, reagieren diese sehr schnell. Die Pulsventile 4, 5, 6 und 7 werden dabei in Abhängigkeit der Stellung des Schaltkolbens 2 im Schaltzylinder 1, welche von der Wegmeßeinrichtung 3 erfaßt wird, über die Steuereinrichtung 136 angesteuert. Je nach Stellung des Schaltkolbens 2 werden unterschiedliche elektrische Impulse an die Pulsventile 4, 5, 6 und 7 abgegeben, wobei die Pulsventile mit einer vordefinierten, hohen Pulsfrequenz geöffnet und mit einer vordefinierten, geringeren Pulsfrequenz geschlossen werden. So wird der Durchfluß von Druckmittel, welches den Schaltkolben 2 im Schaltzylinder 1 in Bewegung setzt, und damit auch die Geschwindigkeit des Schaltkolbens 2 während eines Schaltvorganges im Schaltzylinder 1 variiert. Die Ansteuerung der Pulsventile 4, 5, 6 und 7 ist dabei so ausgelegt, daß alle pulsfähigen Ventile einzeln, gegeneinander oder miteinander aussteuerbar sind. Dadurch ergeben sich unterschiedliche Geschwindigkeiten für den Schaltkolben und somit auch unterschiedliche dynamische Kräfte.

Zur Verdeutlichung der Funktionsweise der Schalteinrichtung wird nachfolgend ein Schaltablauf prinzipmäßig beschrieben.

Wird bei einem Schaltvorgang Druckmittel durch die Leitung 10 der Schalteinrichtung zugeführt, so ist das Pulsventil 5, das die Funktion eines Zuflußventiles hat, geöffnet, während das als Abflußventil ausgebildete Pulsventil 4 geschlossen ist. Damit gelangt Druckmittel über die Leitung 10 durch das Zylinderteil 1A in den Arbeitsraum 12 des Schaltkolbens 2 und bewegt den Schaltkolben 2 von einer Anschlagfläche 13 am Zylinderteil 1A in Richtung einer der Anschlagfläche 13 gegenüberliegenden Anschlagfläche 14 am Zylinderteil 1B.

Bei Eintreten einer Synchronisierungsphase im Getriebe verharrt der Schaltkolben 2 kurz vor seinem Anschlag an der Anschlagfläche 14 in einer Sperrstellung, wobei die Druckbeaufschlagung des Schaltkolbens 2 durch weitere Zuführung von Druckmittel durch die Leitung 10 erheblich zunimmt.

Der in Bewegungsrichtung des Schaltkolbens 2 liegende Teil des Arbeitsraumes 12 des Schaltkolbens wird während des gesamten Schaltvorganges über die Druckleitung 11 und das geöffnete Pulsventil 6, das als Abflußventil ausgestaltet ist, entspannt. Das der Druckmittelzuführung dienende Pulsventil 7 ist dabei geschlossen.

Mit Ende des Synchronisierungsvorganges wird der Schaltkolben 2 entsperrt, womit sich dieser wieder in Richtung seiner Endposition an der Anschlagfläche 14 in Bewegung setzt, und zwar mit großer Geschwindigkeit aufgrund der hohen Druckbeaufschlagung während des Synchronisierungsvorganges. Dabei wird die jeweilige Stellung des Schaltkolbens 2 von der Wegmeßeinrichtung 3 erfaßt, welche über elektrische Impulse die Pulsventile 6 und 7 derart ansteuert, daß das der Entlüftung dienende Pulsventil 6 geschlossen wird, was dazu führt, daß ein sogenanntes Polster von Druckmittel die Bewegung des Schaltkolbens 2 auf dem letzten kurzen Wegstück zur Anschlagfläche 14 drastisch reduziert. Die Druckzuführung über das Pulsventil 5 an der Druckleitung 10 wird bereits während oder gegen Ende des kurzfristigen Stillstandes des Schaltkolbens 2 während der Synchronisierungsphase des Getriebes durch Schließen des Zuleitungsventiles 5 eingestellt. Um den Schaltkolben 2 trotz des Druckmittelpolsters zwischen Schaltkolben 2 und Anschlagfläche 14 in seine Endstellung zu bringen, wird das Pulsventil 6 von der Wegmeßeinrichtung 3 unmittelbar vor dem Anschlag des Schaltkolbens 2 an der Anschlagfläche 14 in eine geöffnete Stellung geschaltet, damit das zwischen Schaltkolben 2 und Anschlagfläche 14 befindliche Druckmittel über die Druckleitung 11 entweichen kann und der Schaltkolben 2 bei seinem Anschlag an der Anschlagfläche 14 nicht zurückfedert.

Bei einem Umschalten erfolgt der gleiche Schaltablauf in umgekehrter Richtung, wobei die Pulsventile 5 und 6 geschlossen sind, die Schalteinrichtung über die Druckleitung 11 und das geöffnete Pulsventil 7 mit Druck beaufschlagt wird und über das geöffnete Pulsventil 4 und die Druckleitung 10 entspannt wird.

### Bezugszeichen

- 1: Schaltzylinder
- 1A: Zylinderteil
- 1B: Zylinderteil
- 2: Schaltkolben
- 2A: Schaltgabel
- 2B: Führungsabsatz
- 3: Wegmeßeinrichtung
- 4: pulsfähiges Ventil
- 5: pulsfähiges Ventil
- 6: pulsfähiges Ventil
- 7: pulsfähgies Ventil
- 8: Eindrehung
- 9: Führungsschiene
- 10: Druckleitung
- 11: Druckleitung
- 12: Arbeitsraum des Schaltkolbens
- 13: Anschlagfläche
- 14: Anschlagfläche

- 102: Getriebe
- 104: Kupplungsglocke
- 106: Hauptgetriebe
- 108: Hilfsgetriebe
- 110: Antriebswelle
- 112: Abtriebswelle
- 114: Abtriebsflansch
- 116: Schalteinrichtung
- 118: Schalteinrichtung
- 120: Schalteinrichtung
- 122: Schalteinrichtung
- 124: Schaltgabel
- 126: Schiebemuffe
- 128: Welle
- 130: Zahnrad
- 132: Zahnrad
- 134: Leitung
- 136: Steuereinrichtung
- 138: Druckquelle
- 140: Leitung
- 144: Verbindungselement

## Patentansprüche

1. Hilfskraftunterstützte Schalteinrichtung (118) für ein mehrgängiges Stufenwechselgetriebe (102) in Vorgelegebauweise mit Ventilen (4, 5, 6, 7) und Schaltzylindern (1), in denen von einem Fluid bewegte Kolben (2) vorgesehen sind, und mit Schaltelementen (2A), mit denen in jeweils einer Schaltgruppe Bauteile des Getriebes zur Bildung einer Drehmomentübertragung verbindbar sind, und für jede Schaltgruppe des Stufenwechselgetriebes eine Einheit vorgesehen ist, in der die Ventile (4, 5, 6, 7), Schaltzylinder (1), Kolben (2) und Schaltelemente (2A) zusammengefaßt sind, **dadurch gekennzeichnet, daß** der Kolben (2) auf einer Kolbenstange (9) angeordnet ist, auf der er axial bewegbar ist.

2. Schalteinrichtung (118) nach Anspruch 1 **dadurch gekennzeichnet, daß** für mehrere Schaltgruppen mehrere Schalteinrichtungen (118, 120, 122) vorgesehen sind, wobei jeder Schaltgruppe eine Schalteinrichtung (118) zugeordnet ist.

3. Schalteinrichtung (118) nach Anspruch 2, **dadurch gekennzeichnet, daß** die mehreren Schalteinrichtungen (118, 120, 122) in einer Reihe angeordnet sind.

4. Schalteinrichtung (118) nach Anspruch 2 oder 3, **dadurch gekennzeichnet, daß** die Kolben (2) der mehreren Schalteinrichtungen (118, 120, 122) auf einer gemeinsamen Kolbenstange (9) angeordnet sind.

5. Schalteinrichtung (118) nach einem der Ansprüche 2 bis 4, **dadurch gekennzeichnet, daß** die mehreren Schalteinrichtungen in einem separaten Bauteil (116) vorgehen sind, das mit dem Getriebe (102) verbindbar ist.

6. Schalteinrichtung (118) nach Anspruch 5, **dadurch gekennzeichnet, daß** die Funktionen des Bauteils (116) unabhängig vom Getriebe (102) einstellbar und prüfbar sind.

7. Schalteinrichtung (118) nach Anspruch 1, **dadurch gekennzeichnet, daß** die Ventile (4, 5, 6, 7) gepulste 2/2-Wegeventile sind.

8. Schalteinrichtung (118) nach Anspruch 7, **dadurch gekennzeichnet, daß** die Ventile (4, 5, 6, 7) mit einer Spannung beaufschlagt sind, die ein Mehrfaches der Nennspannung des Ventils entspricht.

9. Schalteinrichtung (118) nach Anspruch 7 oder 8, **dadurch gekennzeichnet, daß** die Ventile (4, 5, 6, 7) beim Einlegen der drehmomentübertragenden Verbindung mit einer höheren Frequenz beaufschlagt werden als beim Ausschalten der Verbindung.

10. Schalteinrichtung (118) nach Anspruch 1, **dadurch gekennzeichnet, daß** eine Wegmesseinrichtungen (3) vorgesehen ist, die die aktuelle Position des Kolbens (2) in bezug auf den Schaitzylinder (1) feststellt.

11. Schalteinrichtung (118) nach Anspruch 10, **dadurch gekennzeichnet, daß** die Wegmesseinrichtung (3) innerhalb des Schaltzylinders (1) angeordnet ist.

12. Schalteinrichtung (118) nach Anspruch 10, **dadurch gekennzeichnet, daß** die Wegmesseinrichtung (3) außerhalb des Schaltzylinders (1) vorgesehen ist.

13. Schalteinrichtung (118) nach einem der vorherigen Ansprüche, **dadurch gekennzeichnet , daß** Anschläge vorgesehen sind, die ein Anschlagen der Kolben (2) an den Rändern des Schaltzylinders (1) dämpfen.

14. Schalteinrichtung (118) nach Anspruch 13, **dadurch gekennzeichnet, daß** die Anschläge innerhalb des Schaltzylinders (1) vorgesehen sind.

15. Schalteinrichtung (118) nach Anspruch 13, **dadurch gekennzeichnet, daß** die Anschläge außerhalb des Schaltzylinders (1) angeordnet sind.

## Claims

1. Power-assisted shift device (118) for a multi-speed gear changing layshaft transmission (102) comprising valves (4, 5, 6, 7) and shift cylinders (1), in which pistons (2) moved by a fluid are provided, and comprising shift elements (2A), to which in, in each case, one shift group components of the transmission are connectable to form a torque transmission, and for each shift group of the gear changing transmission a unit is provided, in which the valves (4, 5, 6, 7), shift cylinders (1), pistons (2) and shift elements (2A) are combined, **characterized in that** the piston (2) is disposed on a piston rod (9), on which it is axially movable.

2. Shift device (118) according to claim 1 **characterized in that** for a plurality of shift groups a plurality of shift devices (118, 120, 122) are provided, wherein a shift device (118) is associated with each shift group.

3. Shift device (118) according to claim 2, **characterized in that** the plurality of shift devices (118, 120, 122) are arranged in a row.

4. Shift device (118) according to claim 2 or 3, **characterized in that** the pistons (2) of the plurality of shift devices (118, 120, 122) are disposed on a common piston rod (9).

5. Shift device (118) according to one of claims 2 to 4, **characterized in that** the plurality of shift devices are provided in a separate component (116), which is connectable to the transmission (102).

6. Shift device (118) according to claim 5, **characterized in that** the functions of the component (116) are adjustable and checkable independently of the transmission (102).

7. Shift device (118) according to claim 1, **characterized in that** the valves (4, 5, 6, 7) are pulsed two/two-way valves.

8. Shift device (118) according to claim 7, **characterized in that** the valves (4, 5, 6, 7) are acted upon by a voltage, which corresponds to a multiple of the nominal voltage of the valve.

9. Shift device (118) according to claim 7 or 8, **characterized in that** the valves (4, 5, 6, 7) upon making of the torque-transmitting connection are acted upon with a higher frequency than upon breaking of the connection.

10. Shift device (118) according to claim 1, **characterized in that** a displacement measuring device (3) is provided, which detects the actual position of the piston (2) in relation to the shift cylinder (1).

11. Shift device (118) according to claim 10, **characterized in that** the displacement measuring device (3) is disposed inside the shift cylinder (1).

12. Shift device (118) according to claim 10, **characterized in that** the displacement measuring device (3) is provided outside of the shift cylinder (1).

13. Shift device (118) according to one of the preceding claims, **characterized in that** stops are provided, which dampen a knocking of the pistons (2) against the edges of the shift cylinder (1).

14. Shift device (118) according to claim 13, **characterized in that** the stops are provided inside the shift cylinder (1).

15. Shift device (118) according to claim 13, **characterized in that** the stops are disposed outside of the shift cylinder (1).

## Revendications

1. Dispositif de changement de vitesses servo-assisté (118) d'une boîte de vitesses à plusieurs rapports (102) à arbres de renvoi, doté de valves (4, 5, 6, 7) et de vérins de commande (1), dans lesquels sont prévus des pistons (2) déplaçables par l'effet d'un fluide, et doté d'éléments de commande (2A), à l'aide desquels, respectivement dans un groupe de commande, des éléments de la boîte de vitesses peuvent être liés pour établir la transmission de couple, et pour chaque groupe de commande de la boîte de vitesses à plusieurs rapports étant prévue une unité dans laquelle sont regroupés des valves (4, 5, 6, 7), des vérins de commande (1), des pistons (2) et des éléments de commande (2A), **caractérisé en ce que** le piston (2) est disposé sur une tige de piston (9) sur laquelle celui-ci peut être déplacé axialement.

2. Dispositif de changement de vitesses (118) selon la revendication 1, **caractérisé en ce que** pour plusieurs groupes de commande sont prévus plusieurs dispositifs de changement de vitesses (118, 120, 122), sachant que à chaque groupe de commande est associé un dispositif de changement de vitesses (118).

3. Dispositif de changement de vitesses (118) selon la revendication 2, **caractérisé en ce que** les dispositifs de changement de vitesses (118, 120, 122) sont disposés en ligne.

4. Dispositif de changement de vitesses (118) selon les revendications 2 ou 3, **caractérisé en ce que** les pistons (2) des dispositifs de changement de vitesses (118, 120, 122) sont disposés sur une même tige de piston (9).

5. Dispositif de changement de vitesses (118) selon une des revendications 2 à 4, **caractérisé en ce que** les dispositifs de changement de vitesses sont prévus dans une unité séparée (116) pouvant être liée à la boîte de vitesses (102).

6. Dispositif de changement de vitesses (118) selon la revendication 5, **caractérisé en ce que** les fonctions de l'unité (116) peuvent être réglées et contrôlées indépendamment de la boîte de vitesses (102).

7. Dispositif de changement de vitesses (118) selon la revendication 1, **caractérisé en ce que** les valves (4, 5, 6, 7) sont des distributeurs 2/2 pulsés.

8. Dispositif de changement de vitesses (118) selon la revendication 7, **caractérisé en ce que** les valves (4, 5, 6, 7) sont mises sous une tension correspondant à un multiple de la tension nominale des valves.

9. Dispositif de changement de vitesses (118) selon les revendications 7 ou 8, **caractérisé en ce que** lors de l'établissement de la liaison pour la transmission de couple, les valves (4, 5, 6, 7) sont pressurisées avec une fréquence plus élevée de celle existante au moment de la coupure de la liaison.

10. Dispositif de changement de vitesses (118) selon la revendication 1, **caractérisé en ce que** est prévu un dispositif de mesure de la course (3) qui détermine la position momentanée du piston (2) par rapport au vérin de commande (1).

11. Dispositif de changement de vitesses (118) selon la revendication 10, **caractérisé en ce que** le dispositif de mesure de la course (3) est disposé à l'intérieur du vérin de commande (1).

12. Dispositif de changement de vitesses (118) selon la revendication 10, **caractérisé en ce que** le dispositif de mesure de la course (3) est prévu à l'extérieur du vérin de commande (1).

13. Dispositif de changement de vitesses (118) selon une des revendications précédentes, **caractérisé en ce que** sont prévues des butées, amortissant les chocs lorsque les pistons (2) entrent en contact avec les bords du vérin de commande (1).

14. Dispositif de changement de vitesses (118) selon la revendication 13, **caractérisé en ce que** les butées sont prévues à l'intérieur du vérin de commande (1).

15. Dispositif de changement de vitesses (118) selon la revendication 13, **caractérisé en ce que** les butées sont disposées à l'extérieur du vérin de commande (1).
